(19) Europäisches Patentamt
European Patent Office
Office européen des brevets

(11) Veröffentlichungsnummer : **0 044 028**
**B1**

(12) # EUROPÄISCHE PATENTSCHRIFT

(45) Veröffentlichungstag der Patentschrift : **01.06.83**

(21) Anmeldenummer : **81105285.1**

(22) Anmeldetag : **08.07.81**

(51) Int. Cl.³ : **C 01 G 49/00**, C 04 B 33/14

(54) **Chlorofluoroferrat(II,III), Verfahren zu seiner Herstellung, seine Verwendung und Chlorofluoroferrat(II,III) enthaltende Schleifscheibe.**

(30) Priorität : **11.07.80 DE 3026294**

(43) Veröffentlichungstag der Anmeldung : **20.01.82 Patentblatt 82/03**

(45) Bekanntmachung des Hinweises auf die Patenterteilung : **01.06.83 Patentblatt 83/22**

(84) Benannte Vertragsstaaten : **AT BE CH DE FR GB IT LI LU NL SE**

(56) Entgegenhaltungen :
**EP A 0 008 413**
**AU B 452 927**
**DE A 2 110 611**
**FR A 2 376 077**
**GB A 1 362 660**
**US A 3 944 647**

(73) Patentinhaber : **RIEDEL-DE HAEN AKTIENGESELLSCHAFT**
**Wunstorfer Strasse 40**
**D-3016 Seelze 1 (DE)**

(72) Erfinder : **Hirschberg, Rudolf, Dr.**
**Schillerstrasse 13**
**D-3052 Bad Nenndorf (DE)**
Erfinder : **Schönfeld, Bernd, Dr.**
**Pappelweg 6**
**D-3052 Bad Nenndorf (DE)**

(74) Vertreter : **Meyer-Dulheuer, Karl-Hermann, Dr., et al**
**HOECHST Aktiengesellschaft Zentrale Patentabteilung Postfach 80 03 20**
**D-6230 Frankfurt/Main 80 (DE)**

**EP 0 044 028 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Chlorofluoroferrat (II, III), Verfahren zu seiner Herstellung, seine Verwendung und Chlorofluoroferrat (II, III) enthaltende Schleifscheibe

Die Erfindung bezieht sich auf Chlorofluoroferrat (II, III), Verfahren zu seiner Herstellung durch Verschmelzen von Alkali- oder Ammonium-halogeniden mit einem Eisen(III)-halogenid und metallischem Eisen, seine Verwendung als Füllstoff in Schleifscheiben und diesen Füllstoff enthaltende Schleifscheibe.

Die Herstellung von wasserfreien Chloroferrat-Komplexen durch Erhitzen von Alkalichlorid mit wasserhaltigem Ferrichlorid und Entfernen des Hydratwassers ist bereits bekannt. Dabei werden die Ausgangsstoffe in annähernd gleichen molaren Mengen verwendet, und die Reaktion wird bei einer Temperatur im Bereich von 40 °C bis etwa 310 °C ausgeführt (vgl. deutsche Offenlegungsschrift 21 10 611 = US-Patentschrift 37 29 543).

Ferner ist bekannt, daß wasserfreie Alkalichloroferrate (II, III) der Formel

$$A_xFe_y^{++}Fe_z^{+++}Cl_{x+2y+3z}$$

worin A ein Alkalimetallion oder Ammoniumion, x eine Zahl von 1 bis 10, y ein Wert von größer als Null bis maximal 1 und z ein Wert von Null bis 1 ist, durch Zusammenschmelzen von Alkalichlorid oder Ammoniumchlorid mit wasserfreiem Eisen(III)-chlorid und Eisenpulver hergestellt werden. Die Schmelztemperatur beträgt dabei 400 °C oder auch 700 °C (vgl. deutsche Offenlegungsschrift 28 35 542). Diese Alkalichloroferrate (II, III) eignen sich als aktive Füllstoffe für Schleifscheiben ; sie werden in Mengen von 5 bis 10 Prozent (bezogen auf das Gewicht der Schleifscheibe) eingesetzt (vgl. deutsche Offenlegungsschrift 28 35 543). Aufgabe der Erfindung ist die Bereitstellung eines Halogenoferrats, das in wirtschaftlicher Weise herstellbar ist, eine geringe Hygroskopizität aufweist und als aktiver Füllstoff für Schleifscheiben geeignet ist.

Die Erfindung betrifft ein Chlorofluoroferrat (II, III), der Formel (1)

$$A_xFeCl_yF_z, \qquad (1)$$

worin A ein Alkalimetallion oder ein Ammoniumion, x eine Zahl von 1 bis 10, y ein Wert von 0,1 bis 12,9, z ein Wert von 0,1 bis 12,9 ist und die Summe aus y + z mindestens 3 beträgt. Das Alkalimetallion ist vorzugsweise ein Lithiumion, Natriumion oder Kaliumion. Erfindungsgemäße Verbindungen der Formel (1) sind beispielsweise Natriumdichlorofluoroferrat $NaFeCl_2F$, Dinatriumtrichlorofluoroferrat $Na_2FeCl_3F$ und Tetranatriumpentachlorofluoroferrat $Na_4FeCl_5F$, ferner Kaliumdichlorofluoroferrat $KFeCl_2F$, Dikaliumtrichlorofluoroferrat $K_2FeCl_3F$ und Tetrakaliumpentachlorofluoroferrat $K_4FeCl_5F$ sowie gemischte Chlorofluoroferrate wie Natriumtrikaliumpentachlorofluoroferrat $NaK_3FeCl_5F$ und Ammoniumtrikaliumpentachlorofluoroferrat $NH_4K_3FeCl_5F$.

Besonders wertvoll ist ein Chlorofluoroferrat (II, III) der Formel (2)

$$K_xFeCl_yF_z, \qquad (2)$$

worin x eine Zahl von 1 bis 6, y ein Wert von 2 bis 8 und z ein Wert von 1 bis 2 ist und die Summe aus y + z mindestens 3 beträgt.

Ferner betrifft die Erfindung ein Verfahren zur Herstellung eines Halogenoferrats durch Verschmelzen von Alkali- oder Ammoniumhalogeniden mit einem Eisen (III)-halogenid und metallischem Eisen, das dadurch gekennzeichnet ist, daß man zum Zwecke der Herstellung eines Chlorofluoroferrats (II, III) der Formel (1)

$$A_xFeCl_yF_z, \qquad (1)$$

worin A ein Alkalimetallion oder ein Ammoniumion, x eine Zahl von 1 bis 10, y ein Wert von 0,1 bis 12,9, z ein Wert von 0,1 bis 12,9 ist und die Summe aus y + z mindestens 3 beträgt, ein Gemisch aus (a) einem Alkalimetallchlorid oder Ammoniumchlorid, (b) einem Alkalifluorid oder Ammoniumfluorid, (c) wasserfreiem Eisen (III)-chlorid und (d) Eisenpulver bei einer Temperatur von 300 bis 900 °C schmilzt.

Weiterhin betrifft die Erfindung die Verwendung eines Chlorofluoroferrats (II, III) der Formel (1) und insbesondere der Formel (2) als Füllstoff für Schleifscheiben sowie die Schleifscheibe, die ein solches Chlorofluoroferrat (II, III) als Füllstoff enthält.

Die erfindungsgemäßen Chlorofluoroferrate werden in technisch einfacher und wirtschaftlicher Weise durch Schmelzen eines Gemisches aus (a) einem Alkalimetallchlorid oder Ammoniumchlorid, (b) einem Alkalifluorid oder Ammoniumfluorid, (c) wasserfreiem Eisen (III)-chlorid und (d) Eisenpulver hergestellt. Die Schmelztemperatur beträgt normalerweise 300 bis 900 °C, vorzugsweise 400 bis 800 °C. Geeignete Alkalimetallchloride sind Lithiumchlorid, Natriumchlorid und insbesondere Kaliumchlorid, und geeignete Alkalifluoride sind Lithiumfluorid, Natriumfluorid und insbesondere Kaliumfluorid. Die Menge der verfahrensgemäß eingesetzten Ausgangsstoffe richtet sich nach der jeweils gewünschten Zusammensetzung des Endproduktes. Pro Mol Eisen wird die Komponente (a) in einer Menge von 0,3 bis 30 Mol, vorzugsweise 3 bis 15 Mol, die Komponente (b) in einer Menge von 0,3 bis 30 Mol, vorzugsweise 1

bis 3 Mol, und die Komponente (c) in einer Menge von 2 bis 3 mol, vorzugsweise 2,0 bis ?,1 Mol, verwendet.

Als Reaktionsgefäß zur Durchführung des vorgenannten Schmelzverfahrens eignet sich jedes heizbare Gefäß, dessen Wandung von der Schmelze nicht angegriffen wird, z. B. ein Eisenkessel.

Je nach Menge der Ausgangsstoffe und Reaktionstemperatur beträgt die Reaktionsdauer 1 bis 4 Stunden, vorzugsweise 2 bis 3 Stunden. Zur Beschleunigung der Reaktion kann das Reaktionsgemisch nach dem Aufschmelzen zu einer homogenen Schmelze kurze Zeit mechanisch durchmischt werden, z. B. durch Rühren. Nach Beendigung der Reaktion läßt man die Schmelze im Reaktionsgefäß erstarren und zerkleinert sie anschließend bei Raumtemperatur, z. B. durch Mahlen. Die Schmelze kann aber auch aus dem Reaktionsgefäß abgelassen und mit Hilfe eines Kühlaggregats, z. B. einer Kühlwalze oder einer Kühlschnecke, in eine zerkleinerte Form gebracht werden.

Die erfindunsgemäßen Chlorofluoroferrate eignen sich insbesondere als aktive Füllstoffe für Schleifscheiben. Ihre Wirksamkeit entspricht bei den meisten Stahlsorten der Wirksamkeit der bekannten Chloroferrate, jedoch weisen sie eine deutlich geringere Hygroskopizität auf. Bei einigen speziellen Stahlsorten, z. B. V-Stählen, zeigen Chlorofluoroferrate eine höhere Wirksamkeit als Chloroferrate. Die Chlorofluoroferrate werden entweder einzeln oder im Gemisch mit anderen Füllstoffen eingesetzt ; als zusätzliche Füllstoffe sind vorzugsweise Eisensulfide geeignet, z. B. Pyrit.

Die folgenden Beispiele dienen zur näheren Erläuterung der Erfindung. Prozentangaben beziehen sich dabei jeweils auf das Gewicht.

## Beispiel 1

In einem Eisenkessel mit einem Volumen von 250 l wird ein Gemenge aus 112 kg (1,4 kmol) Kaliumchlorid, 29 kg (0,5 kmol) Kaliumfluorid, 54 kg (0,33 kmol) wasserfreiem Eisen(III)-chlorid und 9,3 kg (0,167 kmol) Eisenpulver im Laufe von 2 Stunden auf eine Temperatur von 750 °C erhitzt, wobei sich eine homogene Schmelze bildet.

Diese Schmelze wird zur Vervollständigung der Reaktion einige Male umgerührt. Nach Erkalten der Schmelze erhält man 204 kg einer grauen, kristallinen Masse der Zusammensetzung $K_4FeCl_5F$.

## Beispiel 2

In einem Eisenkessel mit einem Volumen von 150 l wird ein Gemenge aus 37 kg (0,5 kmol) Kaliumchlorid, 29 kg (0,5 kmol) Kaliumfluorid, 54 kg (0,33 kmol) wasserfreiem Eisen(III)-chlorid und 9,3 kg (0,167 kmol) Eisenpulver im Laufe von 2 Stunden auf eine Temperatur von 800 °C erhitzt, wobei sich eine homogene Schmelze bildet. Diese Schmelze wird zur Vervollständigung der Reaktion einige Male umgerührt und dann zum Abkühlen stehengelassen. Man erhält 129 kg einer grauen, kristallinen Masse der Zusammensetzung $K_2FeCl_3F$.

## Beispiel 3

a) Unter Verwendung eines Gemisches aus 20 Prozent eines handelsüblichen Phenol-Formaldehyd-Harzes mit einem Schmelzbereich von 110 bis 120 °C, 64 Prozent Korundpulver, 8 Prozent Pyrit und jeweils 8 Prozent der nach den Beispielen 1 und 2 erhaltenen Chlorofluoroferrate werden gleichartige Schleifscheiben mit einem Durchmesser von 60 cm, einer Dicke von 7,5 mm und einem Gewicht von 5 kg hergestellt. Zum Vergleich werden entsprechende Scheiben unter Verwendung von $K_2FeCl_4$ als aktivem Füllstoff hergestellt.

b) Die Scheiben werden auf einer handelsüblichen Schleifmaschine mit steigender Umfangsgeschwindigkeit solange in Rotation versetzt, bis sie zerspringen. Die jeweils höchste Umfangsgeschwindigkeit ist unter « Sprenggeschwindigkeit » in der nachstehenden Tabelle aufgeführt.

c) Scheiben gleicher Zusammensetzung werden zum Trennschleifen von stabförmigen Werkstücken mit quadratischem Querschnitt (10 cm × 10 cm) aus einer für Prüfzwecke standardisierten Legierung « CK 45 normalisiert » eingesetzt. Die Schnitte werden senkrecht zur Längsachse des jeweiligen Werkstücks durchgeführt, wobei die Umfangsgeschwindigkeit jeweils 100 m/s und die Leistungsaufnahme der Schleifmaschine jeweils 125 A beträgt. Nach einer bestimmten Anzahl von Schnitten werden Durchmesserverlust pro Schnitt, spezifische Trennleistung (= Abnahme des Werkstücks pro Zeiteinheit) und Leistungsfaktor (= Quotient aus Abnahme des Werkstücks und Abnahme des Scheibenquerschnitts) ermittelt. Die jeweils ermittelten Werte sind in der folgenden Tabelle zusammengestellt.

d) Zur Bestimmung der Hygroskopizität wird die Gewichtszunahme der nach den Beispielen 1 und 2 hergestellten Chlorofluoroferrate nach Lagerung bei einer relativen Luftfeuchtigkeit von 60 % und einer Temperatur von 20 °C bestimmt ; die Lagerzeit beträgt jeweils 10 Stunden und 100 Stunden. Zum Vergleich wird der bekannte Füllstoff $K_2FeCl_4$ entsprechend untersucht. Die ermittelten Werte sind in der folgenden Tabelle enthalten.

Tabelle

| Füllstoff | $K_2FeCl_4$ | $K_4FeCl_5F$ | $K_2FeCl_3F$ |
|---|---|---|---|
| Sprenggeschwindigkeit (m/s) | 156 | 154 | 153 |
| Schnittanzahl | 3 × 5 | 3 × 5 | 2 × 5 |
| Durchmesserverlust (mm) | 19 | 14 | 16 |
| Spez. Trennleistung ($cm^2/s$) | 6,8 | 7,0 | 7,1 |
| Leistungsfaktor | 3,1 | 4,0 | 3,6 |
| Gewichtszunahme (%) | | | |
| nach 10 Stunden | 2,6 | 0,5 | 0,6 |
| nach 100 Stunden | 8,2 | 2,5 | 3,3 |

**Ansprüche** (für die Vertragsstaaten : BE, CH, DE, FR, GB, IT, LI, LU, NL, SE)

1. Chlorofluoroferrat (II, III) der Formel (1)

$$A_xFeCl_yF_z, \quad (1)$$

worin A ein Alkalimetallion oder ein Ammoniumion, x eine Zahl von 1 bis 10, y ein Wert von 0,1 bis 12,9, z ein Wert von 0,1 bis 12,9 ist und die Summe aus y + z mindestens 3 beträgt.

2. Verfahren zur Herstellung eines Halogenoferrats durch Verschmelzen von Alkali- oder Ammoniumhalogeniden mit einem Eisen (III)-halogenid und metallischem Eisen, dadurch gekennzeichnet, daß man zum Zwecke der Herstellung eines Chlorofluoroferrats (II, III) der Formel (1)

$$A_xFeCl_yF_z, \quad (1)$$

worin A ein Alkalimetallion oder ein Ammoniumion, x eine Zahl von 1 bis 10, y ein Wert von 0,1 bis 12,9, z ein Wert von 0,1 bis 12,9 ist und die Summe aus y + z mindestens 3 beträgt, ein Gemisch aus (a) einem Alkalimetallchlorid oder Ammoniumchlorid, (b) einem Alkalifluorid oder Ammoniumfluorid, (c) wasserfreiem Eisen (III)-chlorid und (d) Eisenpulver bei einer Temperatur von 300 bis 900 °C schmilzt.

3. Verwendung eines Chlorofluoroferrats (II, III) gemäß Anspruch 1 als aktiver Füllstoff für Schleifscheiben.

4. Schleifscheibe, enthaltend ein Halogenoferrat als Füllstoff, dadurch gekennzeichnet, daß das Halogenoferrat ein Chlorofluoroferrat (II, III) gemäß Anspruch 1 ist.

**Ansprüche** (für den Vertragsstaat AT)

1. Verfahren zur Herstellung eines Halogenoferrats durch Verschmelzen von Alkali- oder Ammoniumhalogeniden mit einem Eisen (III)-halogenid und metallischem Eisen, dadurch gekennzeichnet, daß man zum Zwecke der Herstellung eines Chlorofluoroferrats (II, III) der Formel (1)

$$A_xFeCl_yF_z, \quad (1)$$

worin A ein Alkalimetallion oder ein Amoniumion, x eine Zahl von 1 bis 10, y ein Wert von 0,1 bis 12,9, z ein Wert von 0,1 bis 12,9 ist und die Summe aus y + z mindestens 3 beträgt, ein Gemisch aus (a) einem Alkalimetallchlorid oder Ammoniumchlorid, (b) einem Alkalifluorid oder Ammoniumfluorid, (c) wasserfreiem Eisen (III)-chlorid und (d) Eisenpulver bei einer Temperatur von 300 bis 900 °C schmilzt.

2. Verwendung eines nach Anspruch 1 hergestellten Chlorofluoroferrats (II, III) als aktiver Füllstoff für Schleifscheiben.

3. Schleifscheibe, enthaltend ein Halogenoferrat als Füllstoff, dadurch gekennzeichnet, daß das Halogenoferrat ein nach Anspruch 1 hergestelltes Chlorofluoroferrat (II, III) ist.

**Claims** (for the Contracting States : BE, CH, LI, DE, FR, GB, IT, LU, NL, SE)

1. Chlorofluoroferrate (II, III) of the formula (1)

$$A_xFeCl_yF_z \quad (1)$$

in which A is an alkali metal ion or an ammonium ion, x is a number from 1 to 10, y is a figure from 0.1 to 12.9, z is a figure from 0.1 to 12.9 and the total of y + z is at least 3.

2. Process for the manufacture of a halogenoferrate by fusing alkali metal halides or ammonium halides with an iron (III) halide and metallic iron, characterised in that a mixture composed of (a) an alkali metal chloride or ammonium chloride, (b) an alkali metal fluoride or ammonium fluoride, (c) anhydrous iron (III) chloride and (d) iron powder is fused at a temperature of 300 to 900 °C in order to manufacture a chlorofluoroferrate (II, III) of the formula (1)

$$A_xFeCl_yF_z \qquad (1)$$

in which A is an alkali metal ion or an ammonium ion, x is a number from 1 to 10, y is a figure from 0.1 to 12.9, z is a figure from 0.1 to 12.9 and the total of y + z is at least 3.

3. Use of a chlorofluoroferrate (II, III) as claimed in claim 1 as an active filler for grinding wheels.

4. Grinding wheel containing, as the filler, a halogenoferrate, characterised in that the halogenoferrate is a chlorofluoroferrate (II, III) as claimed in claim 1.

**Claims** (for the Contracting State AT)

1. Process for the manufacture of a halogenoferrate by fusing alkali metal halides or ammonium halides with an iron (III) halide and metallic iron, characterised in that a mixture composed of (a) an alkali metal chloride or ammonium chloride, (b) an alkali metal fluoride or ammonium fluoride, (c) anhydrous iron (III) chloride and (d) iron powder is fused at a temperature of 300 to 900 °C in order to manufacture a chlorofluoroferrate (II, III) of the formula (1)

$$A_xFeCl_yF_z \qquad (1)$$

in which A is an alkali metal ion or an ammonium ion, x is a number from 1 to 10, y is a figure from 0.1 to 12.9, z is a figure from 0.1 to 12.9 and the total of y + z is at least 3.

2. Use of a chlorofluoroferrate (II, III) prepared according to claim 1 as an active filler for grinding wheels.

3. Grinding wheel containing, as the filler, a halogenoferrate, characterised in that the halogenoferrate is a chlorofluoroferrate (II, III) prepared according to claim 1.

**Revendications** (pour les Etats contractants : BE, CH, LI, DE, FR, GB, IT, LU, NL, SE)

1. Chlorofluoroferrate (II, III) répondant à la formule (1)

$$A_xFeCl_yF_z \qquad (1)$$

dans laquelle A représente un ion de métal alcalin ou un ion d'ammonium, x un nombre de 1 à 10, y un nombre de 0,1 à 12,9 et z un nombre de 0,1 à 12,9, et la somme (y + z) est au moins égale à 3.

2. Procédé de préparation d'un halogénoferrate par fusion d'halogénures de métaux alcalins ou d'ammonium avec un halogénure de fer (III) et du fer métallique, procédé caractérisé en ce que, pour préparer un chlorofluoroferrate (II, III) répondant à la formule (1)

$$A_xFeCl_yF_z \qquad (1)$$

dans laquelle A représente un ion de métal alcalin ou un ion d'ammonium, x un nombre de 1 à 10, y un nombre de 0,1 à 12,9 et z un nombre de 0,1 à 12,9, et la somme (y + z) est au moins égale à 3, on fond à une température de 300 à 900 °C un mélange constitué (a) d'un chlorure de métal alcalin ou de chlorure d'ammonium, (b) d'un fluorure de métal alcalin ou de fluorure d'ammonium, (c) de chlorure de fer (III) anhydre et (d) de poudre de fer.

3. Application d'un chlorofluoroferrate (II, III) selon la revendication 1, comme charge active pour des meules.

4. Meule contenant un halogénoferrate comme charge, caractérisée en ce que l'halogénoferrate est un chlorofluoroferrate (II, III) selon la revendication 1.

**Revendications** (pour l'Etat contractant AT)

1. Procédé de préparation d'un halogénoferrate par fusion d'halogénures de métaux alcalins ou d'ammonium avec un halogénure de fer (III) et du fer métallique, procédé caractérisé en ce que, pour préparer un chlorofluoroferrate (II, III) répondant à la formule (1)

$$A_xFeCl_yF_z \qquad (1)$$

dans laquelle A représente un ion de métal alcalin ou un ion d'ammonium, x un nombre de 1 à 10, y un nombre de 0,1 à 12,9 et z un nombre de 0,1 à 12,9, et la somme (y + z) est au moins égale à 3, on fond à une température de 300 à 900 °C un mélange constitué (a) d'un chlorure de métal alcalin ou de chlorure d'ammonium, (b) d'un fluorure de métal alcalin ou de fluorure d'ammonium, (c) de chlorure de fer (III) anhydre et (d) de poudre de fer.

2. Application d'un chlorofluoroferrate (II, III) selon la revendication 1, comme charge active pour des meules.

3. Meule contenant un halogénoferrate comme charge, caractérisée en ce que l'halogénoferrate est un chlorofluoroferrate (II, III) selon la revendication 1.